# EUROPEAN PATENT SPECIFICATION

(11) **EP 0 500 124 B1**
(45) Date of publication and mention of the grant of the patent: **20.08.1997**
(21) Application number: 92102948.4
(22) Date of filing: 21.02.1992
(51) Int. Cl.: F02F 1/42, F02B 31/00

(54) **Induction system for an internal combustion engine**
Einlasssystem für eine Brennkraftmaschine
Système d'aspiration d'un moteur à combustion interne

(30) Priority: 21.02.1991 JP 47436/91; 08.04.1991 JP 101789/91; 15.04.1991 JP 111182/91; 28.06.1991 JP 185400/91; 05.08.1991 JP 218015/91
(43) Date of publication of application: 26.08.1992
(73) Proprietor: YAMAHA HATSUDOKI KABUSHIKI KAISHA, Iwata-shi Shizuoka-ken, 438 (JP)
(72) Inventor: Isaka, Yoshiharu, c/o Yamaha Hatsudoki K.K., Iwata-shi, Shizuoka-ken 438 (JP)
(74) Representative: Grünecker, Kinkeldey, Stockmair & Schwanhäusser Anwaltssozietät

(56) References cited:
- EP-A- 0 054 964
- EP-A- 0 235 288
- WO-A-91/14858

## Description

This invention relates to an induction system for an internal combustion engine having a cylinder head bolted to a cylinder block by cylinder head bolts and at least partially defining a combustion chamber, an intake passage arrangement comprising at least two intake passages for each cylinder to serve a plurality of intake valves and a control valve for redirecting a flow of intake charge to create swirl motion in the combustion chamber.

Such an arrangement is already known from document EP-A-0 235 288 (see particularly the embodiment of figure 49 therein). In this case, two intake passages are provided for both of the intake ports, wherein each intake passage is divided in a main passage and a swirl intake passage. Said separated swirl intake passage is provided with a rotatable butterfly valve in order to control the amount of intake charge, which is to be additionally introduced into the combustion chamber having swirled motion.

From document WO 91/14858 it is already known to provide a control valve at a lower side of the intake passage, in order to generate tumble motion within the combustion chamber.

As is well known, most internal combustion engines are called upon, in their application, to operate over widely varying speed and load ranges. This is particularly true in connection with vehicular applications such as automobiles and motorcycles. As is also well known, because of this speed and load variation over which the engine is operated, there are many compromises in the design of the engine. This is particularly true in the area of the induction system.

It has been well known that combustion at low engine speeds and low engine loads can be significantly improved with attendant improvements in fuel economy and exhaust emission control if a high degree of turbulence is induced into the intake charge and in the combustion chamber. However, all turbulence increasing devices in the induction system tend to offer some flow resistance. Therefore, the use of turbulence increasing devices in the induction system reduces the maximum power output of the engine. Thus, most induction systems are designed as compromise between good low speed performance and good high speed performance.

One form of turbulence which is generated in the combustion chamber is characterized as "swirl". Swirl is a flow of the charge in the combustion chamber in a generally circumferential direction around the axis of the cylinder. Swirl is generally generated by use of swirl ports in the induction system. However, the generation of swirl can reduce the volumetric efficiency at high speed. This is because swirl ports have higher flow resistance than non-swirl ports. In addition, there are some phases of running of the engine when swirl is not desirable even though some form of motion of the charge in the chamber is desirable.

Another form of motion in the combustion chamber is called "tumble". Tumble is a swirling motion of the intake charge about an axis that generally extends transversely to the cylinder bore axis. With such a flow arrangement, the charge tends to flow across the cylinder head, down one side of the cylinder bore, back across the cylinder bore across the top of the head of the piston and then up the other side of the cylinder bore back to the cylinder head with this flow pattern repeating. This type of motion also requires the formation of a specially formed port which will provide flow resistance and reduce volumetric efficiency under high speed. Like swirl, tumble is more effective at some speed than other speeds.

Of course, even more turbulence may be generated in the intake charge if both swirl and tumble can be generated at the same time. However, generating both such motions through a single port configuration can further increase the flow resistance and reduce high speed performance.

One way in which the flow pattern in the combustion chamber can be varied under varying speed and load conditions is to provide a control valve in the induction passage that changes the effective configuration of the induction passage as the control valve is moved. The control valve can then be moved in response to varying speed and load conditions so as to provide the desired flow pattern. Such arrangements, however, as previously proposed have only permitted the establishment of either one type of swirling motion (either swirl or tumble) or substantially no turbulence.

One technique for changing the flow pattern from an intake passage in an internal combustion engine employs an additional passage that intersects the main intake passage upstream of the valve seat and through which another higher velocity flow is established. However, like other flow altering devices, there are some running conditions when it is not desirable to have this small port be effective. This can be done through the provision of a control valve but if another control valve is also employed for changing the effective configuration of the port, then the engine becomes very complicated. Furthermore, it may be physically impossible to employ two such valves in the cylinder head of an engine, where the intake port is normally formed.

As has been noted, one way in which the flow pattern within a combustion chamber may be altered is by providing a control valve that operates in the intake passage of the engine. However, where such a control valve is provided, even when the control valve is in a wide open position, some obstruction to the flow through the intake passage may occur. This can be either by direct flow resistance of the valve or a mounting portion of it extending into the induction passage even when the valve is fully opened. In addition, the control valve in its fully open position or some portion associated with it can give rise to a less than smooth intake passage which will induce turbulence within the intake passage itself and, accordingly, adversely effect volumetric efficiency.

Therefore, it is an objective of the present invention to provide an improved induction system for an internal combustion engine as mentioned above which permits the generation of swirl and/or tumble depending upon the running conditions of the engine. More specifically, the new system should permit selective increase in turbulence in the combustion chamber under some running conditions and different flow patterns under other running conditions.

This technical problem is solved by an induction system for an internal combustion engine as indicated in claim 1.

According to a preferred embodiment the internal combustion engine comprises a pair of inlet passages extending through the cylinder head and terminating at a pair of adjacent intake ports both serving the cylinder. A single control valve is journaled in the cylinder head contiguous to the inlet passages and is moveable between a first position wherein the flow through passages is substantially unrestricted and a second position extending into respective ones of the intake passages for redirecting the flow there through. The first and second and valve positions are effective to divert the flow through the respective inlet passages in different directions to establish predetermined flow patterns within the cylinder when the control valve is in its second position which is different from the flow pattern when the control is in first position.

Other preferred embodiments of the present invention are laid down in the further sub-claims.

In the following the present invention is explained in greater detail by means of several embodiments in conjunction with the accompanying drawings wherein:

Figure 1 is an end elevational view of an internal combustion engine constructed in accordance with an embodiment of this invention with portions broken away and shown in cross section and certain portions of the engine eliminated and certain of its controls shown schematically.

Figure 2 is an enlarged cross sectional view taken along the line 2-2 of Figure 1 and shows the control valve construction.

Figure 3 is an enlarged cross sectional view taken along the line 3-3 of Figure 1 but shows another embodiment.

Figure 4 is a cross sectional view, in part similar to Figure 3, and shows another embodiment of the invention.

Figure 5 is a view similar to Figure 1 and shows yet another embodiment of the invention.

Figure 6 is a cross sectional view taken along the line 6-6 of Figure 5.

Figure 7 is an enlarged view, in part similar to Figures 1 and 5, and shows another embodiment of the invention.

Figure 8 is a cross sectional view taken along the line 8-8 of Figure 7 and shows the control valve of this embodiment in its first position.

Figure 9 is a cross sectional view, in part similar to Figure 8, and shows the control valve in its fully opened position.

Figure 10 is a view, in part similar to Figures 1, 5 and 7 and shows another embodiment of the invention with the control valve in its first position.

Figure 11 is a view in part similar to Figure 10 and shows the control valve in its second opened position.

Figure 12 is cross sectional view taken through the intake passage of this embodiment.

Figure 13 is a view in part similar to Figures 1, 5, 7 and 10 and shows yet another embodiment of this invention.

Figure 14 is a cross sectional view taken along the line 14-14 of Figure 13 and shows the control valve in its first position.

Figure 15 is a cross sectional view, in part similar to Figure 14, and shows the control valve in its second opened position.

Figure 16 is a side elevational view of the control valve.

Figure 17 is a cross sectional view taken along the line 17-17 of Figure 16.

Figure 18 is a partial view of a portion of the control valve of this embodiment.

Figure 19 is a view in part similar to Figures 1, 5, 7 and 10 and shows yet another embodiment of the invention.

Figure 20 is a cross sectional view in part similar to Figures 2, 8 and 14 showing the control valve of this embodiment in its first position.

Figure 21 is a view in part similar to Figure 20 and shows the control valve in its second position.

Figure 22 is a view in part similar to Figures 1, 5, 7, 10, 13 and 19 and shows a still further embodiment of the invention.

Figure 23 is a view in part similar to Figures 1, 5, 7, 10, 13, 19 and 22 and shows yet another embodiment of this invention.

Figure 24 is an enlarged cross sectional view taken in a plane parallel to Figure 23 and shows the control valve and its relationship to the intake port of this embodiment.

Figure 25 is a cross sectional view taken along the line 25-25 of Figure 23.

Figure 26 is an enlarged side elevational view of the control valve of this embodiment.

Figure 27 is a cross sectional view taken along the line 27-27 of Figure 26.

Figure 28 is an enlarged view of a portion of the control valve of this embodiment looking in a different direction from Figure 26.

Figure 29 is a cross sectional view, in part similar to Figure 25, but shows a different embodiment of the control valve arrangement.

Figure 30 is an enlarged cross sectional view, in part similar to Figure 24 and shows another embodiment of the invention.

Figure 31 is a perspective view of the combined valve seat rectifier plate of this embodiment.

Figure 32 is another embodiment of a combined valve seat rectifier plate arrangement in conjunction with the disposal of the control valve according to the present invention.

### DETAILED DESCRIPTION OF THE PREFERRED EMBODIMENTS OF THE INVENTION

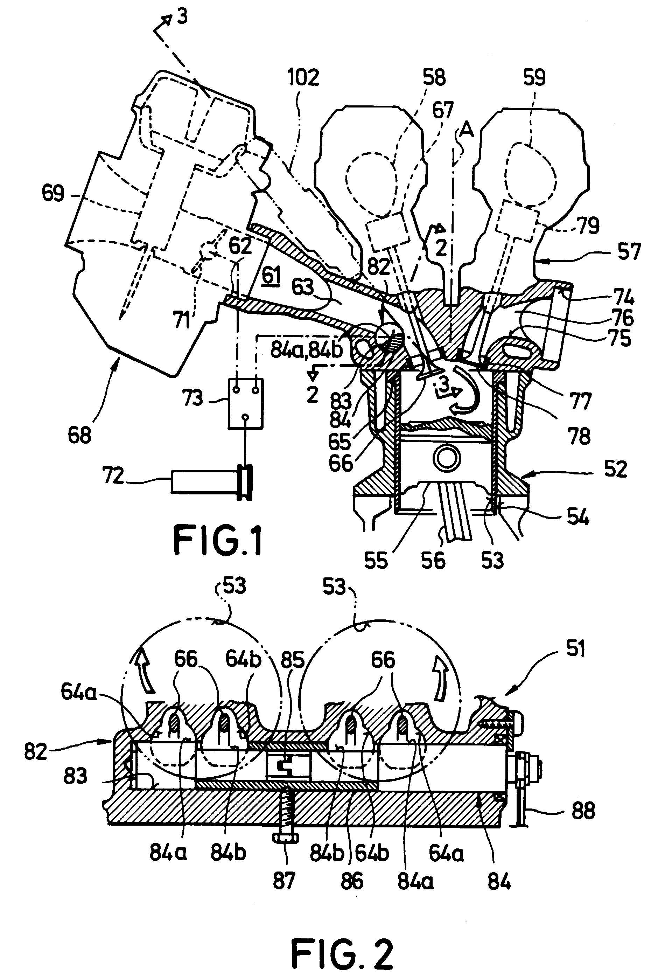

Referring now in detail to the drawings and initially to the embodiments of Figures 1 and 2, an internal combustion engine constructed in accordance with this embodiment is identified generally by the reference numeral 51. In this embodiment, like the other embodiments to be described, the engine 51 is of the four cylinder, inline, twin overhead camshaft 4 valve per cylinder type. Although the invention is described in conjunction with an engine having this configuration, it should be readily apparent to those skilled in the art how the invention can be practiced with engines of other configurations. Also since the invention deals primarily with induction system and the air flow pattern created within the combustion chambers, only the upper portion of the engine has been depicted and, in most instances, only a single cylinder of the engine is shown. It is believed that those skilled in the art will understand how the invention can be practiced with complete engines and engines of other cylinder numbers and types, as aforementioned.

The engine 51 includes a cylinder block, indicated generally by the reference numeral 52 that has aligned cylinder bores 53 formed by pressed or cast in cylinder liners 54. Pistons 55 reciprocate in the cylinder bores 53 and are connected to a crankshaft (not shown) by means of connecting rods 56 in a well known manner.

A cylinder head assembly, indicated generally by the reference numeral 57 is affixed to the cylinder block 52 in a suitable manner and rotatably journals a pair of camshafts 58 and 59 which are driven at half speed from the crankshaft in any well known manner. In certain embodiments of this invention, as will become apparent, the engine 51 is divided into two separate paired cylinder block portions that are separated by the drive for the camshafts 58 and 59. Of course, and as will be described later, the camshafts 58 and 59 may be driven off one end of the engine if desired.

A siamesed type of intake passage, indicated generally by the reference numeral 61 extends through one side of the cylinder head 57 from an intake port 62 and then is divided by an internal wall 63 into a pair of passages 64a and 64b that terminate at individual valve seats 65a and 65b the flow through which is controlled by a respective intake valve 66 that is directly actuated by the intake camshaft 58 via thimble tappets 67. In this embodiment, a charge former in the form of a carburetor 68 is provided for supplying a charge to each of the intake ports 61. The charge former 68 is of the air valve type and includes a diaphragm biased piston valve 69 which is positioned upstream of a manually operated throttle valve 71. The throttle valve 71 is operated by a throttle control 72 that is connected to the throttle valve 71 through a connecting assembly 73 which will be described in more detail later.

An exhaust port 74 is formed in the other side of the cylinder head 57 and is divided into a pair of exhaust passages 75 by a dividing wall 76. Valve seats 77 at the base of the passages 75 cooperate with exhaust valves 78. The exhaust valves 78 are operated directly by the exhaust camshaft 59 through thimble tappets 79.

There is further mounted a spark plug (not shown in this embodiment) in the cylinder head 57 centrally of an axis A which is aligned with the axis of the cylinder bore 53 for firing the charge in the chamber. The combustion chamber is indicated generally by the reference numeral 81 and the engine layout is such that the spark plug is disposed centrally between the heads of the intake and exhaust valves 66 and 77, respectively.

The intake passages 64a and 64b are configured so that they are substantially parallel to each other and are comprised of first and second angularly related portions that are merged at a bight. One section, that leading from the port opening 62, extends generally horizontally although it is inclined somewhat downwardly while the other portion, which terminates at the valve seat 65, extends generally parallel to the axis of the cylinder bore (A) and hence the charge issuing from the intake passages 64a and 64b will generally flow along the axis of the cylinder bore (A) and will effect little turbulence in the intake charge. This will provide extremely good volumetric efficiency.

However, it is desirable to provide a high degree of turbulence to the intake charge, particularly at low and mid range performance so as to insure rapid flame travel in the combustion chamber and complete combustion. To this end, there is provided a control valve, indicated generally by the reference 82 which is disposed at the bight of the intake passage portions and which will redirect the flow in such a manner as to create turbulence in the combustion chamber. This turbulence is created by generating both a swirl around the axis of the cylinder bore (A) and also a tumble that will cause the air to flow from the valve seat 65 toward the opposing wall of the cylinder bore 53, be there deflected downwardly across the head of the piston 55 back toward the cylinder bore wall adjacent the valve seat 65 and then upwardly and back across the cylinder head 57 in the manner as previously described. The arrow in Figure 1 indicates this tumble motion.

The control valve 82 is formed in part by means of a bore 83 that extends transversely across the cylinder head 57 perpendicular to the cylinder bore axis (A) and at the lower side of the bight between the intake passage portions forming the passages 64a and 64b. A control valve member, indicated generally by the reference numeral 84 is supported in this bore 83 in a manner which will be described. The control valve member 84 is made up of two segments each of which has a large diameter portion with a cut out 84a and a small diameter portion with a cut out 84b. These sections are connected together for common rotation by a tongue and groove or keyed connection 85. The bore 83 is a blind bore for the two cylinders of the engine and it may be seen how the valve parts are easily inserted. They are held in position axially by means of a locating sleeve 86 which is held in position by a set screw 87. An actuating lever 88 is affixed to the exposed end of each valve shaft 84 and is connected by means of a wire transmitter 89 to the connecting assembly 73 so as to be operated in a sequence with the throttle valve 71. The control valve 82 and specifically the element 84 is moveable between two positions. The first of which is shown in the two figures and in this figure the control valve cut outs 84a and 84b partially obscure the intake passages 64a and 64b on their lower side so as to direct the charge flowing there through to the opposite side of the valve seat 65 so that the charge will tend to enter the combustion chamber in a direction flowing toward the opposing surface of the cylinder bore 53, as aforenoted. Also, because the cut out portions 84a and 84b have a different diameter they will obstruct different portions of the valve port 64a and 64b as clearly shown in Figure 2. This will create a swirl to the intake charge in the direction shown by the arrows in Figure 2. Hence, when the valve portions 84a and 84b are in the position shown in Figures 1 and 2, great turbulence will be added to the intake charge due to its swirl and tumble motion, as aforedescribed. The control valve 82 is held in this position when the throttle valve 71 are at their idle position and as the opening of the throttle increases, the control valve 82 and specifically its element 84 will be opened. The motion is such that the control valve 84 is opened fully long prior to the full opening of the throttle valve 71. One timing relationship in which this may be done will be described later by reference to another embodiment.

When the control valve 82 is in its fully opened position, the surfaces of the control valve will be clear of the intake passages 64a and 64b and there will be no obstruction to air flow and good volumetric efficiency will result. When the valve element 84 is in its fully opened position, the cut out portions 84a and 84b will provide a smooth surface across the bight connecting the intake valve portions 64a and 64b so that there will be no obstruction to the flow when the valve element 84 is in this position.

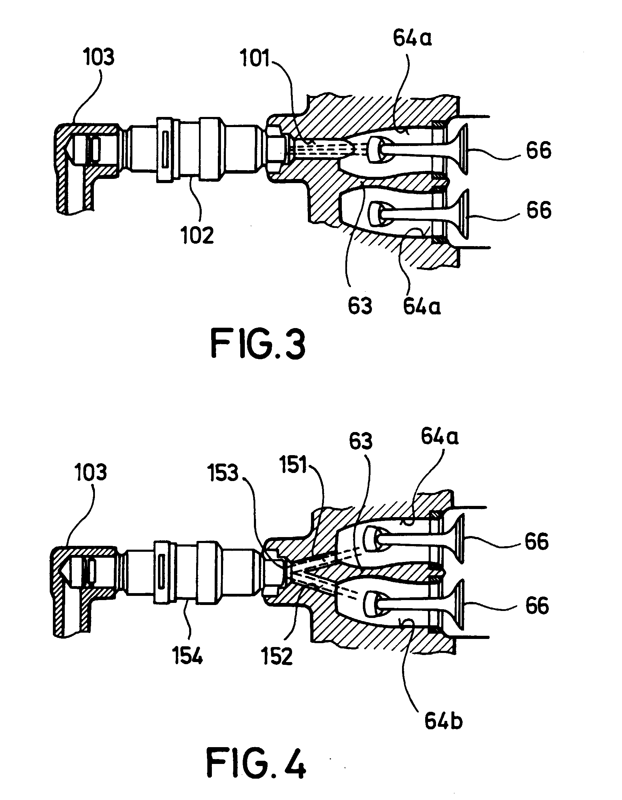

In the embodiment of Figures 1 and 2, the fuel air charge was supplied to the intake passages 64 by carburetors 68. The invention may, however, also be used in conjunction with fuel injected engines and Figure 3 shows such an embodiment in conjunction with a port injected system. Because this embodiment differs only from the previously described embodiment in the form of the charge former, only a partial view of the engine is necessary to understand the construction and operation of this embodiment and components in this embodiment which are the same as those already described have been identified by the same reference numerals and will be described again only in so far as is necessary to understand the construction and operation of this embodiment.

In this embodiment, the cylinder head 57 is provided with a port 101 which intersects one of the intake passage portions, the portion 64a in this embodiment, and a fuel injector, of any known type, indicated by the reference numeral 102 is mounted in the cylinder head and sprays through the port 101 into the intake passage 64a. Fuel is supplied to the injector 102 from a manifold 103. It should be noted that the location of the injector 102 is also shown in phantom in Figure 1 for reference purposes.

Since the injector 102 sprays into the port 64a, which has the greater velocity when the control valve 82 is in its closed position, there will be good dispersion of the fuel in the combustion chamber and good combustion.

Figure 4 shows another embodiment of fuel injected engines. In this embodiment, the cylinder head 57 is formed with a pair of injection ports 151 and 152 which extend from a common opening 153 and terminate in the intake passages 64a and 64b, respectively. A single fuel injector 154 sprays into the opening 153 and through the ports 151 and 152 to the respective intake passages 64a and 64b. The fuel manifold 103 supplies fuel to the injectors 154. As a further embodiment, there may be supplied separate fuel injectors one for each of the intake passages 64a and 64b.

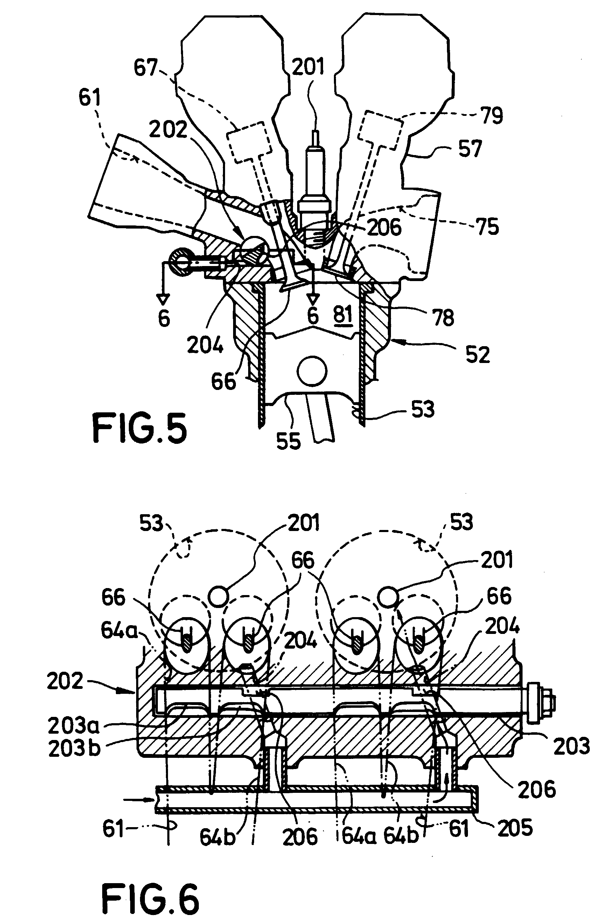

In the embodiments of the invention as thus far described, the control valve arrangement 82 has been effective so as to generate both swirl and tumble at the same time. In some instances, it may be desirable to provide swirl predominately at one condition and tumble predominately at another condition and Figures 5 and 6 show one embodiment as to how this may be accomplished. Since the construction of the basic engine is the same as the previously described embodiments, those components which are the same or substantially the same have been identified by the same reference numerals. In this embodiment, however, the spark plug which did not appear in the previous embodiments, is illustrated and is identified generally by the reference numeral 201.

In this embodiment, the control valve is indicated generally by the reference numeral 202 and includes a valve element 203 which, unlike the previously described embodiment, has equal size and configured cut outs 203a and 203b which cooperate with the intake passages 64a and 64b respectively. When the control valve 203 is in its first or restricting position, a tumble will be generated to the charge entering the combustion chamber 81. However, when the control valve 203 is in its second open position, there will be substantially no turbulence generated through the action of the control valve 203.

However, there are provided a pair of swirl ports 204 which extend through the cylinder head and which terminate in the passages 64b and are angled so as to generate a strong swirling motion if a charge is introduced to them. A manifold 205 interconnects all of the swirl passages 204 of all cylinders with each other. Hence, when one cylinder is experiencing an intake stroke and the intake valve 66 is opened, atmospheric higher pressure air will be delivered through the swirl port 204 from the other intake passages, which are not on an intake cycle, and the strong air velocity will not be encountered and swirl will be generated. The swirl ports 204 are opened and closed by respective second cut outs 206 formed on the control valve 203 and are configured, as shown in the figures, so as to open the swirl ports 204 when the cut outs 203a and 203b effectively open the main intake passages 64a and 64b. Hence, when tumble is being generated there will be no swirl and vice versa.

Although this embodiment provides tumble under one condition and swirl under another condition with an intermediate phase in which both are created, it should be understood that the arrangement of the cut outs 203a, 203b and 206 may be such as to provide swirl and tumble in varying degrees and varying proportions depending upon what the designer desires.

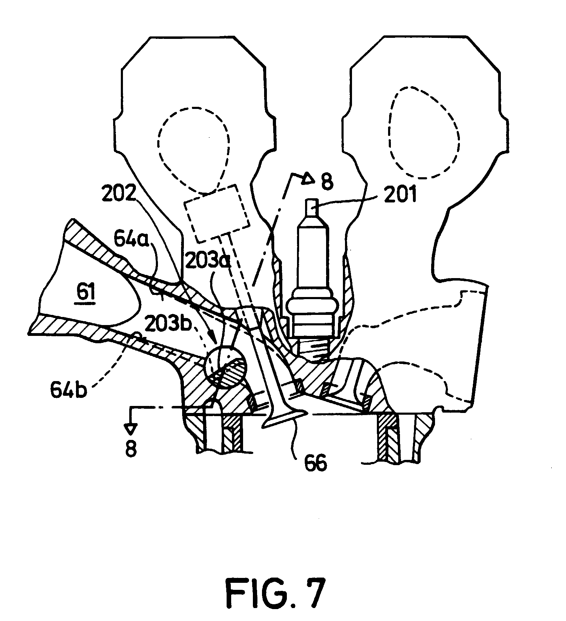

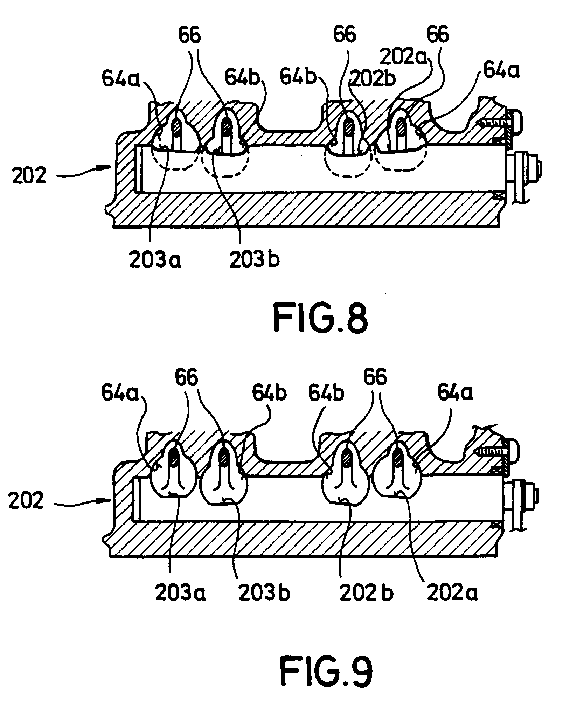

In all of the embodiments as thus far described, the intake passages 64a and 64b have been disposed parallel to each other. Figures 7 through 9 show another embodiment of the invention which is generally the same as the embodiments of Figures 5 and 6 in that a single control valve element is employed but the swirl ports 204 are deleted. As may be clearly seen in the figures, the port 64a has a portion adjacent the control valve 202 which is higher than the passage 64b. As a result, if the cut outs that restrict the flow are of parallel configuration as shown in Figure 8, the different flow passage positions of the intake passages 64a and 64b will provide the different flow areas to achieve the swirl and tumble action when the control valve 202 is in this position. When the control valve 202 is in its fully open position as shown in Figure 9, no swirl or tumble action will be generated. Since the components are the same except for their configuration, the reference numerals of Figures 5 and 6 have been applied to this embodiment.

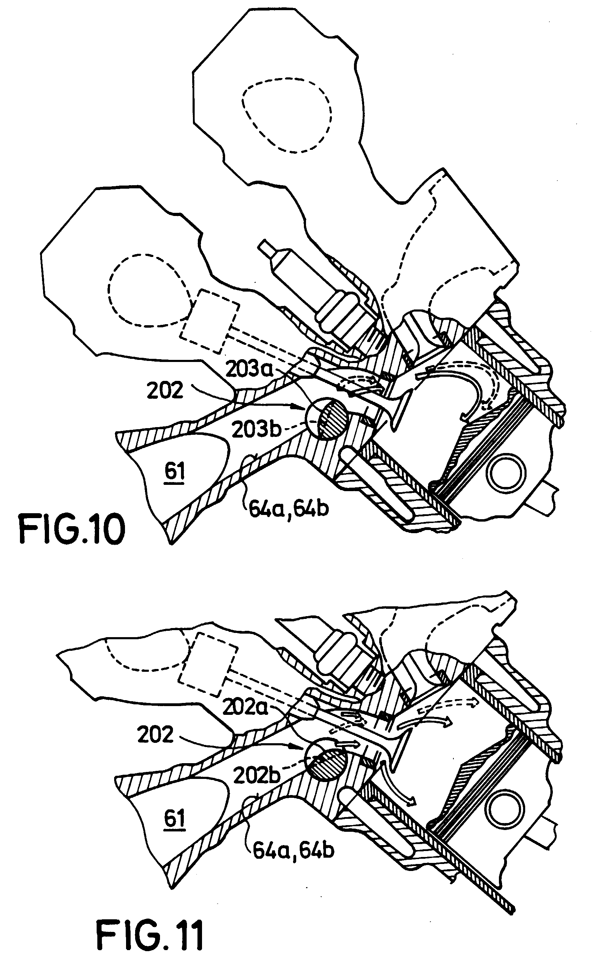

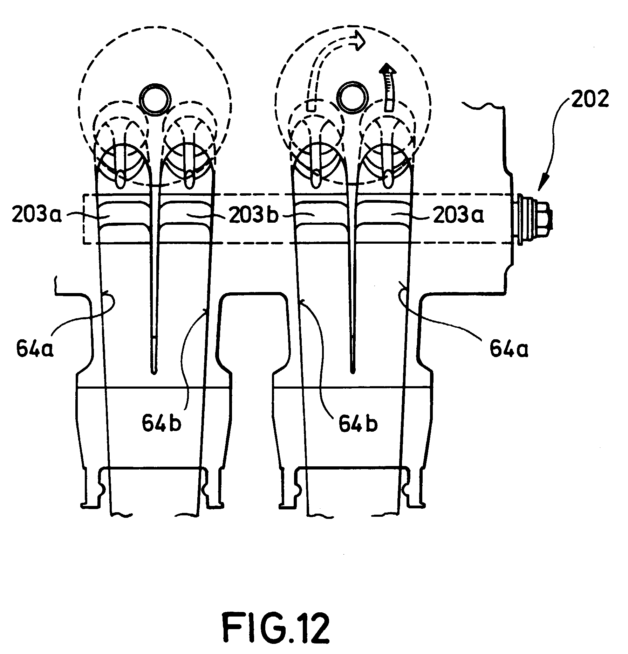

In the embodiments of the invention as thus far described, the cooperation of the valve cut out portions 84a and 84b or 203a and 203b has been such that the flow through the intake passages 64a and 64b is redirected at low and mid speed but is not redirected at wide open throttle. The embodiment of Figures 5 and 6 employed an arrangement wherein some swirl or different flow could be generated under wide open throttle but this involved the use of a swirl port 204. Figures 10 through 12 show an arrangement wherein the flow pattern may be altered by the valve portions 203a and 203b in either extreme position. Since the construction is otherwise the same as the embodiment of Figures 7 through 9, the same reference numerals have been applied here. In Figures 10 and 11, however, the flow through the passage 64a has been identified by the broken arrow while the flow through the passage 64b has been indicated by the solid arrows to show how the flow pattern varies under different positions of the control valve 202.

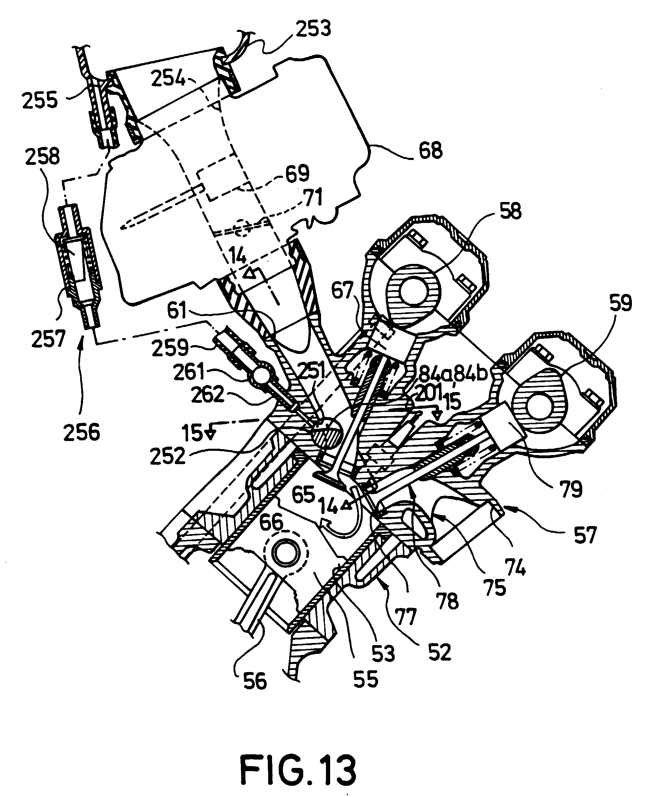

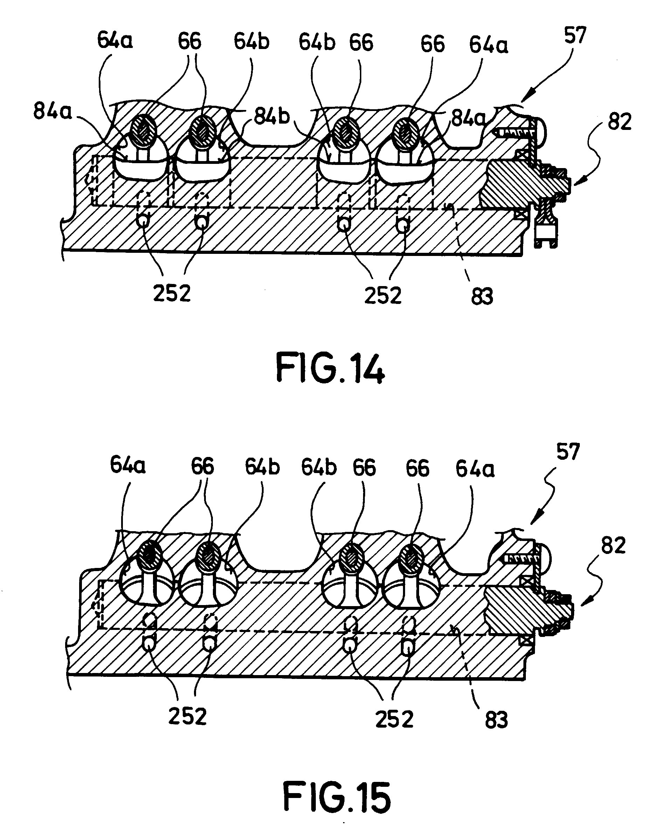

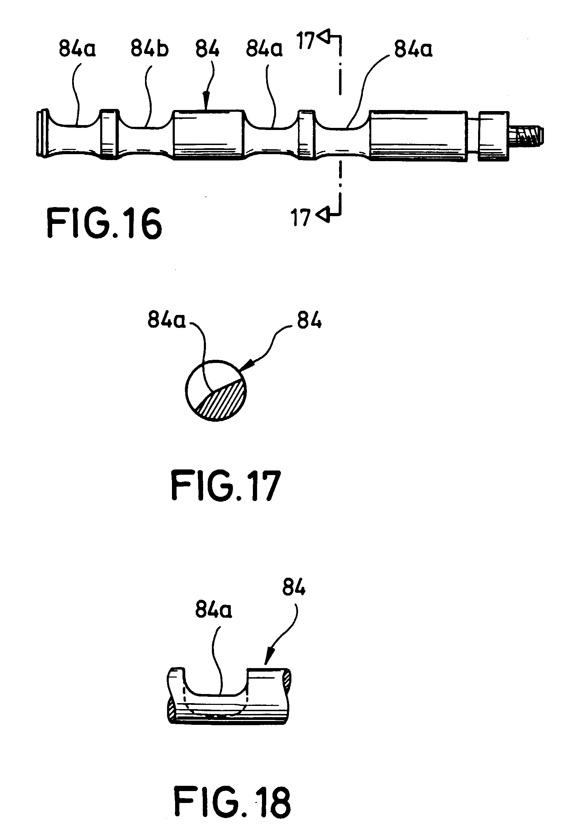

In all of the embodiments of the invention as thus far described, the control valves 83 or 202 have been constructed so that when they are in their second or open positions they offer no flow restriction whatsoever to the intake air flowing through the intake passages 64a and 64b. Furthermore, the shape of the cut outs 84a and 84b or 203a and 203b has been such that they provide a smooth surface to the intake passages 63a and 63b when in their second positions. This may be readily seen from the various figures, when the control valve 83 or 202 are in their first positions there is formed a recess in the intake passages 64a and 64b on the upstream side of the control valve 83 or 202. Fuel may tend to accumulate in this recess and adversely effect the fuel air ratio, particularly under transient conditions. Figures 13 through 18 show another embodiment of the invention which is generally similar to the embodiment of Figures 1 and 2 and, for that reason, the same or similar components have been identified by the same reference numerals. In this embodiment, an arrangement is provided for purging any air that may accumulate in this cut out area so as to avoid the aforenoted possible problems.

As may be seen in Figure 13, a recess 251 is formed between the cylinder head 57 and the cut outs 84a and 84b of the control valve 84 when the control valve element 84 is in its first position. As has been noted, fuel may accumulate in this recess when the control valve 84 is in this position. There is provided, therefore, a port 252 which extends through the cylinder head 57 and which opens into this recess 251 and which is opened and closed by the control valve 84. Atmospheric air is delivered through the port 252 at a higher pressure than exists in the intake passages 64a and 64b when the respective intake valves 66 are opened so as to blow any condensed fuel from this area. This air is acquired from an air inlet device 253 that cooperates with the air inlet opening 254 of the carburetor 67 to deliver air to them. This air will have been filtered and silenced by an appropriate silencing and air cleaner device. An inlet port 255 extends from the air inlet device 253 to a check valve assembly, indicated generally by the reference numeral 256 and which includes a housing 257 in which a spring biased check valve element 258 is positioned. The check valve element 258 will maintain a closed position except when the pressure at the port 252 is less than atmospheric. A flexible conduit 259 interconnects the valve 256 with a manifold 261 that supplies individual nozzles 262 that extend to the ports 251. Hence, when the control valves 84 are in any position so as to restrict the air flow through the induction passages 64a and 64b and the recesses 251 exist, there will be a flow of higher pressure air from the ports 251 to blow any condensed fuel away from this recess and back into the stream of induction air.

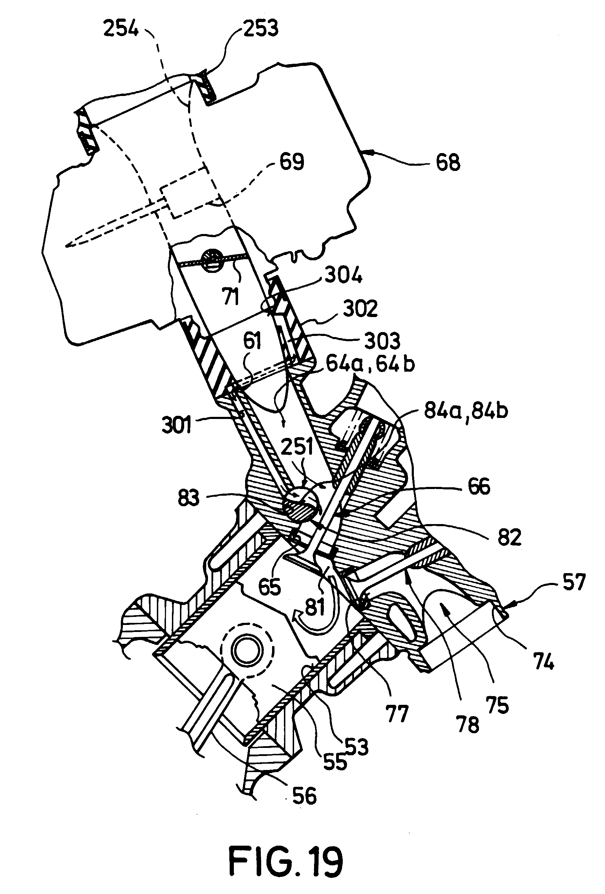

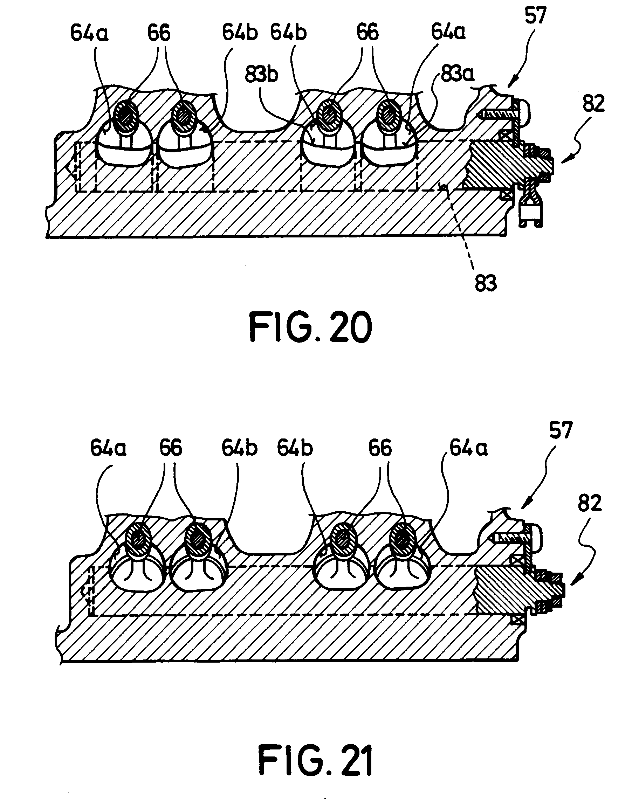

Figures 19 through 21 show another embodiment of the invention which is generally similar to the embodiment of Figures 13 through 18 but in this embodiment the external check valve 256 and manifolding and conduits associated with it are avoided. Also, in this embodiment the intake passages 64a and 64b are inclined toward each other as best shown in Figures 20 and 21 so that the air will be channeled more toward the center of the combustion chamber than the outer sides. Such an arrangement may also be employed with any of the previously described embodiments, if desired. Because of the similarity of this embodiment to the embodiments of Figures 13 through 18, components which are the same or substantially the same have been identified by the same reference numerals and will not be described again.

In this embodiment, an air injection port 301 extends through the cylinder head 57 parallel to the intake passages 64a and 64b and terminates at a spacer 302 that is interposed between the carburetor 68 and the cylinder head 57 and specifically its intake port 61. A passageway 303 in this spacer communicates the air injection port 301 with an intake passage 304 formed in the spacer 302 and which communicates with the downstream end of the carburetor 68. The pressure at this area will be higher than the pressure existent in the recess 251 which is formed when the control valve 84 is in its first position as shown in this figure due to the venturi action that occurs from the restriction of the control valve portions 84a and 84b and the intake passages 64a and 64b, respectively. Hence, there will generated a high velocity air flow that will sweep any fuel away from this recess 251 as with the previously described embodiment.

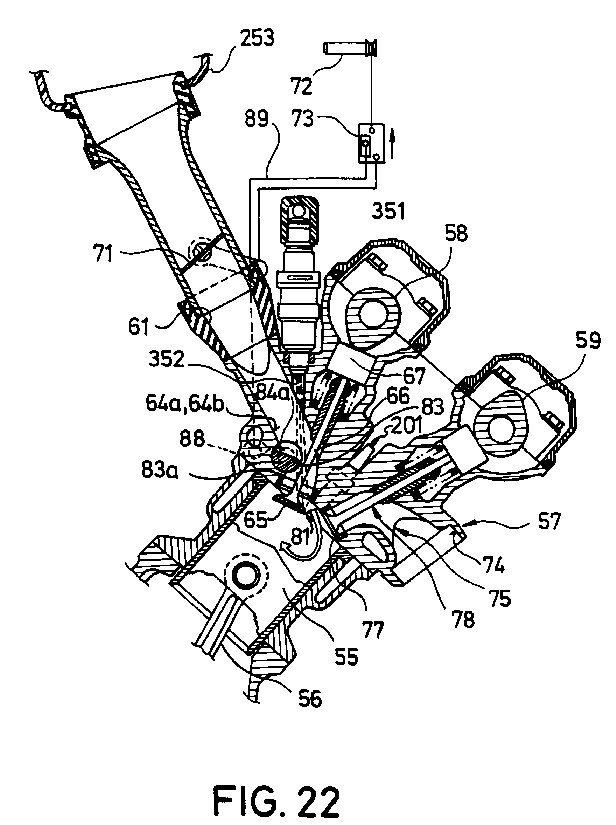

Figure 22 shows another embodiment of the invention wherein this problem of fuel condensation in the area of the recess is avoided when the control valve 83 is in its first position. Because this embodiment is similar to the embodiment of Figures 13 through 18, except as will hereinafter be noted, components which are the same have been identified by the same reference numerals and will not be described again, except in so far as is necessary to understand the construction and operation of this embodiment.

In this embodiment, the use of an air injection port is avoided by providing a fuel injection system and directing the fuel from the fuel injector in such a way that it will not impinge upon the control valve element 84 or if it does it does it on its downstream side, even when the control valve 84 is in its full first position. As may be seen in Figure 22, a fuel injector 351 is mounted in the cylinder head between the intake passages 64a and 64b and the intake camshaft 58. The fuel injector 351 sprays through a discharge port 352 which intersects one or both of the passages 64a and 64b, as described in conjunction with the embodiments of Figures 3 or 4, and thus sprays toward the side of the passages 64a and 64b not obstructed by the control valves 84. As may be seen in this figure, when the control valve 84 is in its full first position it will slightly be intersected by the spray of fuel from the injector 351. This provides no problem, however, since the spray is on the downstream or protruding side of the recesses 84a and/or 84b and hence will be swept from this area by the high velocity air flow. In addition, this spray of fuel on the control valve 84 in this position may provide some desired cooling for the control valve 84.

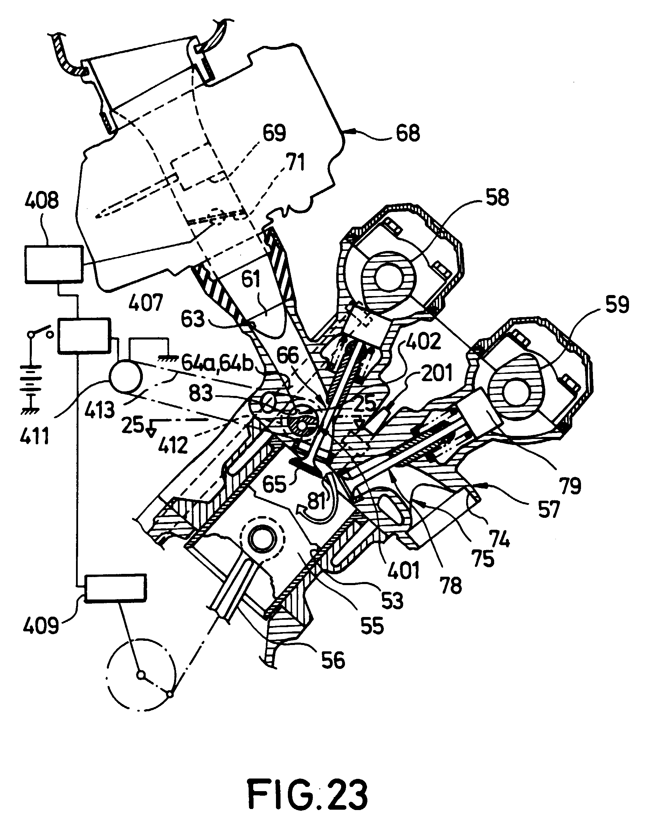

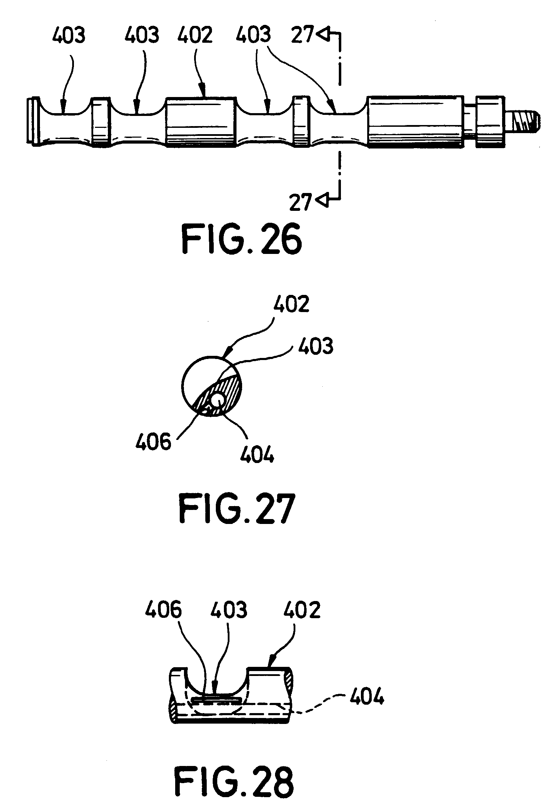

In certain of the embodiments as thus far described the control valve, in addition to changing the effective flow pattern through the intake passages also controls a source of supplemental air flowing to the combustion chambers. Figures 23 through 28 disclose such an embodiment which is generally similar to the embodiment of Figures 1 and 2 and, therefore, has been identified by the same reference numerals as applied in that figure. In this embodiment, however, supplemental air is delivered under higher pressure to the intake passages through the control valve itself as will be readily apparent by the following description of this embodiment.

In this embodiment, the control valve is indicated generally by the reference numeral 401 and includes a control valve element 402 which has a generally cylindrical shape and which is supported for rotation in the bore 83. The control valve element 402 has cut out portions 403 which form the control surfaces, as with the cut outs in the previously described embodiment. As previously noted, these cut outs 403 may be configured to provide only tumble or tumble and swirl to the flow through the intake passages 64a and 64b into the cylinder.

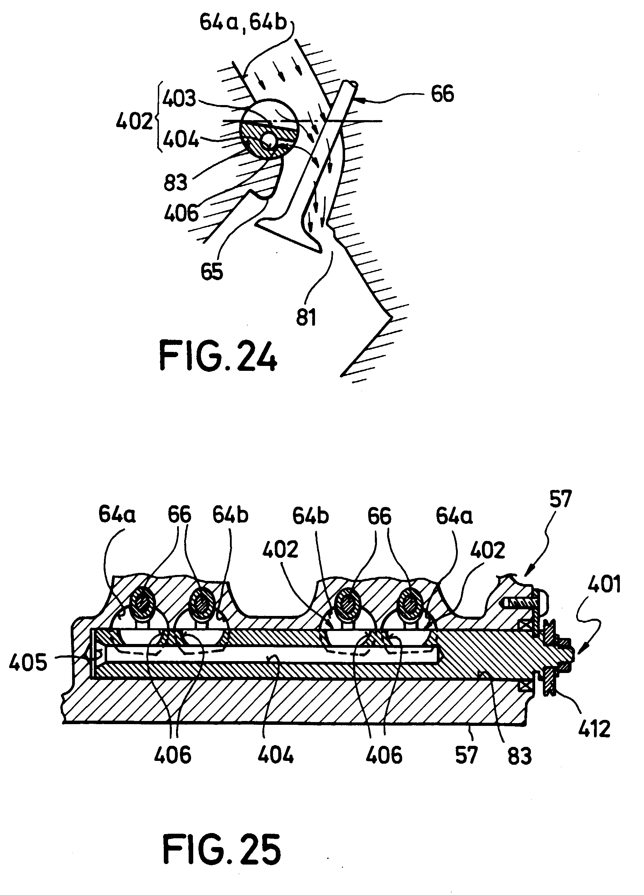

The control valve element 402 further has an axially extending passageway 404 which extends through one of its ends and which is closed at its opened end by a wall 405 formed in the cylinder head 57 at the base of the bore 83. The passageway 404 is intersected by a means of plurality of chordal slots 406 having a configuration as best shown in Figure 25 that open through slits in the outer surface which is disposed in a clockwise direction from the cut outs 403 as shown in Figure 24. When the control valve element 402 is fully in its first position, these chordal slits 406 are disposed at an acute angle to a horizontal plane H so as to discharge in a generally downward direction but against the stems of the intake valves 66.

As described in conjunction with the embodiment of Figures 5 and 6, when one cylinder has its intake valve 66 open, the flow of atmospheric air from another cylinder can issue through the open slot 406 for discharge into the combustion chamber at a high velocity. This will not only add to the turbulence of the air but also cool the valve element 402 and to some extent the intake valve 66.

Figure 23 also shows a different form of control for operating the valve element 402 in this embodiment. In this embodiment the control valve element 402 is controlled by a CPU 407 which receives inputs from a throttle position sensor 408 and a crankshaft speed sensor 409. In accordance with a suitable program, the CPU 407 then controls a stepper motor 411 which drives a pulley 412 fixed to the end of the control valve element 402 via a belt or like transmitter 413. Basically, the control valve 401 is closed under high speed high load conditions and opens under low speed low load conditions to increase turbulence under these conditions.

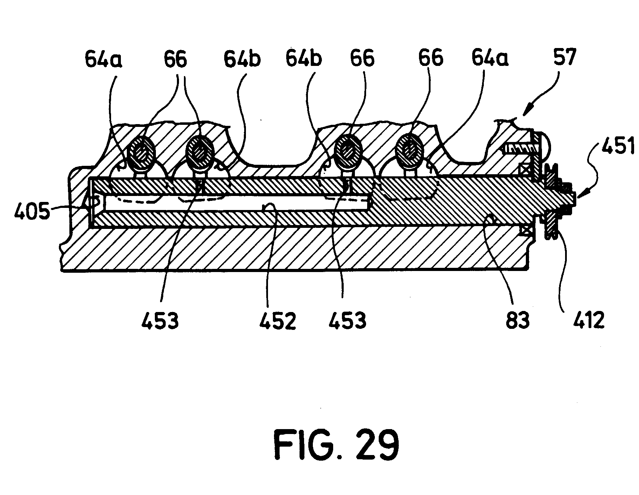

Figure 29 shows another embodiment of the invention which is generally similar to the embodiment of Figures 24 through 28. In this embodiment, however, the air ports are arranged so as to provide a swirling action when they are opened and aside from this difference, the construction is the same as the previously described embodiment. For that reason, common components have been identified by the same reference numerals. In addition, this construction can be fully understood by reference to only a single figure corresponding to Figure 25 of the previous embodiment.

The control valve element in this embodiment is identified by the reference numeral 451 and in this embodiment a bore 452 extends from the blind end 405 of the bore 83 but terminates at only the intake passage 64b of the respective cylinder. It needs not extend to the full end since only the ports 64b of adjacent cylinders are communicated with each other in this embodiment and these cylinders fire alternately to each other. Radially extending bores 453 intersect the passage 452 and thus permit air flow from one passage 64b to the other depending on which intake valve 66 is opened, as previously described.

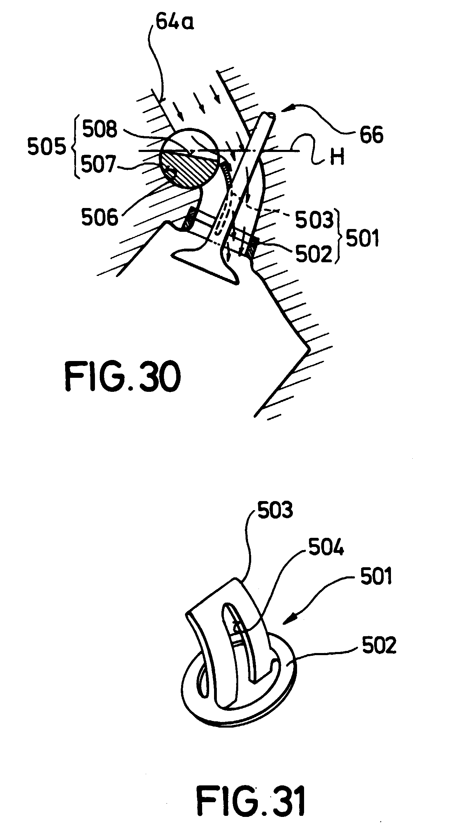

In all of the embodiments as thus far described, the control valve has been positioned at the bight where the two intake passage portions meet each other and relatively close to the valve seat 65. In this way, the control valves themselves have been able to cause the different flow patterns depending upon their positions. Figures 30 and 31 show another embodiment of the invention that includes an additional device, in the form of a rectifier plate (to be described) which cooperates with the control valve and specifically its valving surface to further control the air flow.

In this embodiment, one or both intake valves 66 associated with each cylinder cooperates with a valve seat rectifier plate assemblage, indicated generally by the reference numeral 501. This assemblage includes an annular valve seat portion 502 that forms a valve seat as with all of the previously described embodiments. However, a rectifier plate portion 503 extends integrally upwardly from the valve seat portion 502 and into the respective intake passage 64a and/or 64b depending upon whether one or both passages is controlled by a control valve element. The rectifier plate portion 503 is formed with a cut out slot 504 so as to pass the stem of the respective intake valve 66.

A control valve element is depicted and is identified generally by the reference numeral 505. Like the previously described embodiments, the control valve element 505 is supported in a bore 506 at the bight of the respective intake passage 64a and/or 64b. The valve element 505 has a cylindrical portion 507 that is cut out at 508 to form the flow controlling area.

As may be readily seen in Figure 30, when the control valve element 501 is in its first position, the cut out 508 extends to the upper periphery of the rectifier plate portion 503 and all air will be directed to the outer side of the respective inlet passage 64a to further improve the tumble action.

With this embodiment, since the rectifier plate portion 503 is formed integrally with the valve seat 502, a separate element inserted into the cylinder head which might become displaced is avoided as is a complicated casting practice. Also, the way in which the valve seat is pressed into the cylinder head will further insure against any displacement of this element.

With this embodiment, also, when operating with the control valve element 505 in its second, fully opened position, the rectifier plate portion 503 also serves the function of providing more laminar flow to the intake charge and improves the volumetric efficiency of the engine and the flow distribution within the individual cylinders.

In should be noted that in each of the embodiments as thus far described, the control valve has been positioned at the lower side of the bight where the two intake passage portions meet. This means that the control valve is disposed outwardly of the intake valve and this not only permits a more compact assembly but also permits the intake valves to be angled at a more substantial angle to a transverse plane containing the cylinder bore axis (A). This also positions the control valve between the cylinder head to cylinder block fasteners. Furthermore this placement permits the control valves to be cooled by additional cooling jackets formed in the cylinder head and cylinder block.

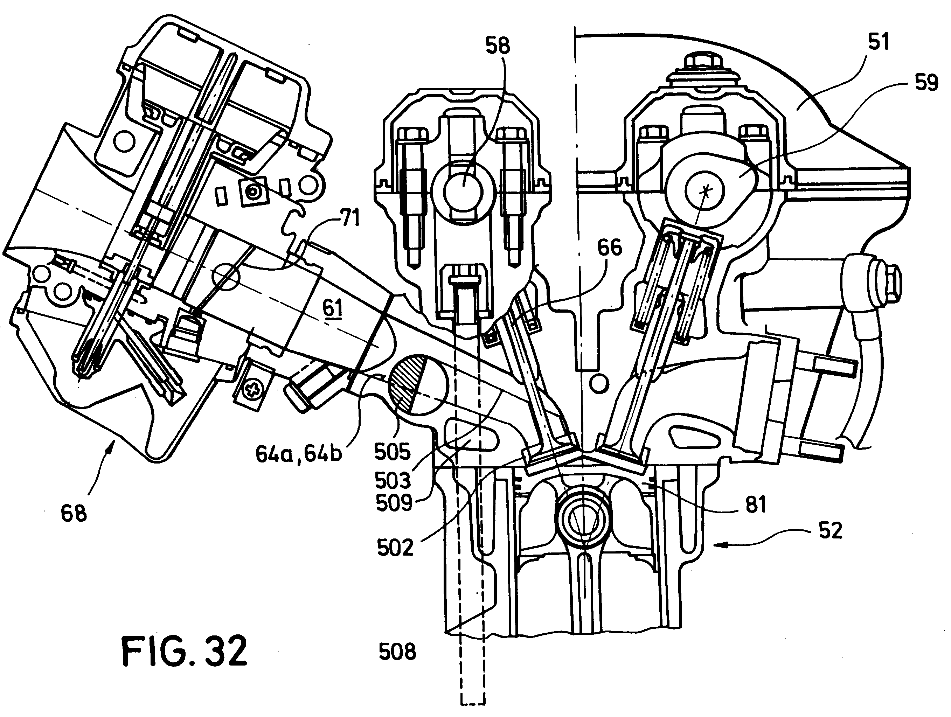

In Fig. 32 a modification of the rectifiable plate arrangement of Figs. 30 and 31 is shown together with a modified arrangement of the control valve element 505 as follows. As in the preceding embodiments the rectifier plate portion 503 is formed integrally with the valve seat 502 extending integrally upwardly therefrom into the respective intake passage 64a or 64b depending upon whether one or both passages are controlled by the control valve element 505. In this case the control valve element 505 is located at a more upstream position (in comparison with the preceding embodiments), namely the control valve element 505 having a semi-circular cross-section as rotatably supported by a lower wall portion of the intake passages 64a and/or 64b close to an area where the intake passage portions 64a, 64b branch off from the common intake port. In this way the control valve element 505 is no longer supported in the area of the bight of the intake pasage 64a, 64b but in the area of a straight upstream portion of said passage 64a, 64b enabling to arrange a more spacious jacket portion 509 at a position close to the lower side of the control valve element 505. Thus, specifically in embodiments of the present invention where an integral valve seat rectifier plate arrangement 501 is used with the rectifer plate portion 503 extending upwardly into the respective intake passages 64a, 64b, the control valve element 505 will not be disposed directly at the bight of the intake passages 64a, 64b. The embodiment as shown in Fig. 32 might specifically be suitable for engines of high compression ratio as the upstream offset positioning of the control valve element 505 renders it to be disposed outside of the area of the cylinder block intake side studs 558, enabling said intake studs 558 under the intake cam shaft 58 to be disposed close to the bight of the intake passages 64a, 64b rendering the valve included angle narrow and enabling to dispose the control valve element at an area outside of the intake studs 558.

## Claims

1. Induction system for an internal combustion engine having a cylinder head (57) bolted to a cylinder block (52) by cylinder head bolts and at least partially defining a combustion chamber (81), an intake passage arrangement (61) comprising at least two intake passages (64a, 64b) for each cylinder to serve a plurality of intake valves (66) and a control valve (82, 202) rotatably supported for redirecting a flow of intake charge to create a swirl motion in the combustion chamber (81), **characterized in that** said control valve (82, 202) is adapted to provide different flow cross-sections for the intake passages (64a, 64b) in response to angular positions of the control valve (82, 202), said control valve (82, 202) protruding from a lower side of the associated intake passage (64a, 64b), the engine being considered in an upright position, and deflecting a flow of intake charge toward an upper side of the associated intake passage (64a, 64b), so that a swirl and/or tumble motion is imparted to the intake charge supplied to the combustion chamber (81).

2. Induction system as claimed in claim 1, **characterized in that** the control valve (82) is disposed downstream of a main throttle valve (71) and is activated under engine throttling conditions.

3. Induction system as claimed in claims 1 or 2, **characterized in that** the control valve (82) is moveable between a first position wherein a first flow pattern is generated in the combustion chamber (81) by changing the effective flow areas of the intake passages (64a, 64b) for generating a higher flow velocity through the one of the intake passages (64a) than through the other one of said intake passages (64b), and a second position wherein a second flow pattern is generated in the combustion chamber (81) by redirecting the flow through the intake passages (64a, 64b) in the direction generally across the cylinder bore.

4. Induction system as claimed in claim 3, **characterized in that** the control valve (82) comprises a control valve member (84) for the intake passages (64a, 64b), said control valve member (84) being shaped such that it provides a different flow cross-section for the controlled branch portions of the intake passages (64a, 64b) in response to a certain angular position of the control valve member (84).

5. Induction system as claimed in at least one of the preceding claims 1 to 4, **characterized in that** the control valve (82) comprises a cylindrical valve member (84) rotatable in a bore (83) that extends transversely across the cylinder head (57), perpendicularly to a cylinder axis (A) and at a lower side of a bight between intake passage portions forming the intake passages (64a, 64b).

6. Induction system as claimed in claim 5, **characterized in that** the control valve member (84) is composed of two segments, each of which has a large diameter portion with a cut-out (84a) and small diameter portion with a cut-out (84b), said segments being connected to each other for common rotation by an engagement means (85).

7. Induction system as claimed in claim 6, **characterized in that** the cut-outs (84a, 84b) of the control valve member (84) face the branched portions of each intake passage (64a, 64b) leading to valve seats (65) of the intake valves (66), respectively.

8. Induction system as claimed in at least one of the preceding claims 1 to 7, **characterized in that** the control valve (82) is adapted to integrally control the flow area of intake passage portions at the intake side of a plurality of cylinders.

9. Induction system as claimed in claim 8, **characterized in that** the control valve member (84) is subdivided in the area between two cylinders of the engine.

10. Induction system as claimed in at least one of the preceding claims 2 to 6, **characterized in that** the control valve body (84) is rotatable in synchronism with the main throttle valve (71).

11. Induction system as claimed in at least one of the preceding claims 6 to 10, **characterized in that** the cut-outs (84a, 84b) are semi-circular to form cut out planes which extend in parallel while the cut-out portions (84a, 84b) have a different diameter to obstruct different portions of the intake passages (64a, 64b).

12. Induction system as claimed in at least one of the preceding claims 1 to 11, **characterized in that** a fuel injector (102) is disposed at the cylinder head to spray through a port (101) into only one of the branched portions of an intake passage (64b) or evenly spray into both branched portions of the intake passages (64a, 64b).

13. Induction system as claimed in claim 1, **characterized in that** a control valve member (203) of the control valve (202) is in the shape of a rod and has equally sized and configured cut-outs (203a, 203b) which cooperate with the intake passages (64a, 64b) respectively.

14. Induction system as claimed in at least one of the preceding claims 1 to 13, **characterized in that** swirl ports (204) are formed which extend through the cylinder head and terminate in the at least one intake passage (64b) and disposed angled such to create a strong swirling motion to a charge introduced, the flow cross-section of said swirl port (204) being controlled by the common control valve member (203) of the control valve (202), providing cut-outs (206) on the control valve member (203) for controlling said swirl ports (204).

15. Induction system as claimed in at least one of the preceding claims 1 to 14, **characterized in that** one of the branched portions of an intake passage (64a) is disposed at a level different, specifically higher, than the other branched portion of the intake passage (64b).

16. Induction system as claimed in at least one of the preceding claims 1 to 15, **characterized in that** a recess (251) is formed between the cylinder head (57) and the cut-outs (84a, 84b) of the control valve member (84) and a port (252) is provided to extend through the cylinder head (57) and to open into said recess (251), said port (252) being controlled by the common control valve member (84) to control the supply of pressurized atmospheric air through said port (252), the pressure of which exceeds that prevailing in the intake passages (64a, 64b) when the respective intake valves (66) are open.

17. Induction system as claimed in at least one of the preceding claims 1 to 16, **characterized in that** an air injection port (301) which extends through the cylinder head (47) parallel to the intake passages (64a, 64b) is provided, terminating at a spacer (302) that is interposed between a charge former, specifically carburetor (68), and the cylinder head (57), specifically its intake port (61).

18. Induction system as claimed in claim 17, **characterized in that** the spacer (302) comprises a passageway (303) connecting the air injection port (301) with an intake passage (304) formed in the spacer (302) and which communicates with a downstream element of the charge former, specifically the carburetor (68).

19. Induction system as claimed in at least one of the preceding claims 1 to 18, characterized in that a fuel injector (351) is mounted to the cylinder head between the intake passages (64a, 64b) and an intake cam shaft, spraying through a discharge port (352) which intersects one or both of the intake passages (64a, 64b).

20. Induction system as claimed in at least one of the preceding claims 1 to 19, **characterized in that** the control valve element (402) of the control valve (401) in addition to its control cut-outs (403) has an axially extending passageway (404) which extends through one of its ends and is closed at its open end by a wall (405) formed in the cylinder head (47) at the base of the bore (83), said passageway (404) being intersected by a plurality of cordal slots (406) that open through slits in the outer surface which is disposed in a clockwise direction from the cut-outs (403).

21. Induction system as claimed in claim 1, **characterized in that** a rectifier plate (501) is provided which cooperates with the control valve member (505), said rectifier plate (501) extending from a valve seat portion (502) of one or a plurality of intake valves integrally upwardly and into the respective intake passage (64a, 64b) depending upon which intake passage (64a, 64b) is controlled by the control valve element (505).

22. Induction system as claimed in claim 21, **characterized in that** said control valve (84) is disposed at a lower straight wall portion of the intake passage arrangement (64a,64b) laterally outside of a plane containing the axes of the intake side studs (558).

## Patentansprüche

1. Einlaßsystem für eine Verbrennungskraftmaschine mit einem Zylinderkopf (57), der an einem Zylinderblock (52) mittels Zylinderkopfbolzen befestigt ist, und zumindest teilweise eine Brennkammer (81) definiert, einer Einlaßkanalanordnung (61), die zumindest zwei Einlaßkanäle (64a,64b) für jeden Zylinder aufweist, um eine Vielzahl von Einlaßventilen (66) zu versorgen, und einem drehbar gelagerten Steuerventil (82,202) zur Umlenkung einer Ladungsgemischströmung zur Erzeugung einer Wirbelbewegung in der Brennkammer (81), **dadurch gekennzeichnet,** daß das Steuerventil (82,202) zur Bereitstellung unterschiedlicher Strömungsquerschnitte der Einlaßkanäle (64a,64b) in Abhängigkeit von Winkelstellungen des Steuerventils (82,202) ausgebildet ist, wobei das Steuerventil (82,202) von einer Unterseite des zugehörigen Einlaßkanals (64a,64b) hervorsteht, wenn die Maschine in aufrechter Position betrachtet wird, und eine Ladungsgemischströmung in Richtung der Oberseite des zugehörigen Einlaßkanals (64a,64b) ablenkt, so daß das der Brennkammer (81) zugeführte Ladungsgemisch mit einer Wirbel- und/oder Taumelbewegung versehen wird.

2. Einlaßsystem nach Anspruch 1, **dadurch gekennzeichnet,** daß das Steuerventil (82) stromab eines Hauptdrosselventils (71) angeordnet ist und unter Motordrosselbedingungen aktiviert wird.

3. Einlaßsystem nach Anspruch 1 oder 2, **dadurch gekennzeichnet,** daß das Steuerventil (82) bewegbar ist zwischen einer ersten Stellung, in der ein erstes Strömungsbild in der Brennkammer (81) erzeugt wird durch ein Verändern der effektiven Strömungsflächen der Einlaßkanäle (64a,64b) zur Erzeugung einer höheren Strömungsgeschwindigkeit durch den einen der Einlaßkanäle (64a) als durch den anderen der Einlaßkanäle (64b), und einer zweiten Stellung, in der ein zweites Strömungsbild in der Brennkammer (81) erzeugt wird durch eine Umleitung der Strömung durch die Einlaßkanäle (64a,64b) in einer Richtung im wesentlichen quer zu der Zylinderbohrung.

4. Einlaßsystem nach Anspruch 3, **dadurch gekennzeichnet,** daß das Steuerventil (82) ein Steuerventilelement (84) für die Einlaßkanäle (64a,64b) aufweist, wobei das Steuerventilelement (84) so geformt ist, daß es unterschiedliche Strömungsquerschnitte für die gesteuerten Zweigabschnitte der Einlaßkanäle (64a,64b) in Abhängigkeit einer bestimmten Winkelstellung des Steuerventilelementes (84) bereitstellt.

5. Einlaßsystem nach zumindest einem der vorhergehenden Ansprüche 1 bis 4, **dadurch gekennzeichnet,** daß das Steuerventil (82) ein zylindrisches in einer Bohrung (83) drehbares Ventilelement (84) aufweist, das sich quer über den Zylinderkopf (57) erstreckt, senkrecht zu einer Zylinderachse (A) und an der Unterseite einer Einbuchtung zwischen Einlaßkanalabschnitten, die die Einlaßkanäle (64a,64b) bilden.

6. Einlaßsystem nach Anspruch 5, **dadurch gekennzeichnet,** daß das Steuerventilelement (84) aus zwei Segmenten besteht, von denen jedes einen größeren Durchmesserabschnitt mit einem Ausschnitt (84a) und einen kleineren Durchmesserabschitt mit einem Ausschnitt (84b) aufweist, wobei die Segmente zur gemeinsamen Drehung miteinander durch ein Kopplungsmittel (85) verbunden sind.

7. Einlaßsystem nach Anspruch 6, **dadurch gekennzeichnet,** daß die Ausschnitte (84a,84b) des Steuerventilelementes (84) den Zweigabschnitten der jeweiligen Einlaßkanäle (64a,64b), die zu den Ventilsitzen (65) der Einlaßventile (66) weisen, gegenüber stehen.

8. Einlaßsystem nach zumindest einem der vorhergehenden Ansprüche 1 bis 7, **dadurch gekennzeichnet,** daß das Steuerventil (82) zur gemeinsamen Steuerung der Strömungsflächen der Einlaßkanalabschnitte auf der Einlaßseite einer Vielzahl von Zylindern ausgebildet ist.

9. Einlaßsystem nach Anspruch 8, **dadurch gekennzeichnet,** daß das Steuerventilelement (84) unterteilt ist in die Bereiche zwischen zwei Zylindern des Motors.

10. Einlaßsystem nach zumindest einem der vorhergehenden Ansprüche 2 bis 6, **dadurch gekennzeichnet,** daß der Steuerventilkörper (84) synchron mit dem Hauptdrosselventil (71) drehbar ist.

11. Einlaßsystem nach zumindest einem der vorhergehenden Ansprüche 6 bis 10, **dadurch gekennzeichnet,** daß die Ausschnitte (84a,84b) halbkreisförmig sind, um sich parallel erstreckende Ausschnittebenen zu bilden, wobei die Ausschnittabschnitte (84a,84b) unterschiedliche Durchmesser aufweisen, um unterschiedliche Abschnitte der Einlaßkanäle (64a,64b) zu versperren.

12. Einlaßsystem nach zumindest einem der vorhergehenden Ansprüche 1 bis 11, **dadurch gekennzeichnet,** daß eine Kraftstoffeinspritzvorrichtung (102) an dem Zylinderkopf angeordnet ist, um durch eine Öffnung (101) nur in einem der Zweigabschnitte eines Einlaßkanals (64b) oder gleichmäßig in beide Zweigabschnitte der Einlaßkanäle (64a,64b) zu spritzen.

13. Einlaßsystem nach Anspruch 1, **dadurch gekennzeichnet,** daß das Steuerventilelement (203) des Steuerventils (202) stabförmig ausgebildet ist und gleich große und geformte Ausschnitte (203a,203b), die mit den jeweiligen Einlaßkanälen (64a,64b) zusammenwirken, aufweist.

14. Einlaßsystem nach zumindest einem der vorhergehenden Ansprüche 1 bis 13, **dadurch gekennzeichnet,** daß Wirbelöffnungen (204) vorgesehen sind, die sich durch den Zylinderkopf erstrecken und zumindest in einem der Einlaßkanäle (64b) enden, und so angewinkelt sind, daß der Ladung eine starke Wirbelbewegung induziert wird, wobei der Strömungsquerschnitt der Wirbelöffnungen (204) durch das gemeinsame Steuerventilelement (203) des Steuerventils (202) bestimmt wird, und daß Ausschnitte (206) an dem Steuerventilelement (203) zur Steuerung der Wirbelöffnungen (204) vorgesehen sind.

15. Einlaßsystem nach zumindest einem der vorhergehenden Ansprüche 1 bis 14, **dadurch gekennzeichnet,** daß einer der Zweigabschnitte eines Einlaßkanals (64a) auf einem anderen Niveau angeordnet ist, insbesondere höher angeordnet ist, als der andere Zweigabschnitt des Einlaßkanals (64b).

16. Einlaßsystem nach zumindest einem der vorhergehenden Ansprüche 1 bis 15, **dadurch gekennzeichnet,** daß eine Aussparung (251) zwischen dem Zylinderkopf (57) und den Ausschnitten (84a,84b) des Steuerventilelements (84) gebildet ist, und eine Öffnung (252) vorgesehen ist, die sich durch den Zylinderkopf (57) erstreckt und in diese Vertiefung (251) öffnet, wobei die Öffnung (252) durch das gemeinsame Steuerventilelement (84) gesteuert wird, um die Zufuhr von verdichteter atmosphärischer Luft durch die Öffnung (252) zu steuern, wobei deren Druck den in den Einlaßkanälen (64a,64b) vorherrschenden Druck übersteigt, wenn die jeweiligen Einlaßventile (64) geöffnet sind.

17. Einlaßsystem nach zumindest einem der vorhergehenden Ansprüche 1 bis 16, **dadurch gekennzeichnet,** daß eine Lufteinspritzöffnung (301), die sich durch den Zylinderkopf parallel zu den Einlaßkanälen (64a,64b) erstreckt, vorgesehen ist, und an einem Abstandhalter (302) endet, der zwischen einem Ladungsformer, insbesondere einem Vergaser (68), und dem Zylinderkopf (57), insbesondere seiner Einlaßöffnung (61), angeordnet ist.

18. Einlaßsystem nach Anspruch 17, **dadurch gekennzeichnet,** daß der Abstandhalter (302) einen Durchgang (303) aufweist, der die Lufteinspritzöffnung (301) mit einem in dem Abstandhalter (302) ausgebildeten Einlaßkanal (304) verbindet, und der mit einem stromabseitigen Element des Ladungsformes, insbesondere des Vergasers (68), kommuniziert.

19. Einlaßsystem nach zumindest einem der vorhergehenden Ansprüche 1 bis 18, **dadurch gekennzeichnet,** daß eine Kraftstoffeinspritzvorrichtung (351) an dem Zylinderkopf zwischen den Einlaßkanälen (64a,64b) und einer Einlaßnockenwelle angeordnet ist und durch eine Entlastungsöffnung (352), die einen oder beide der Einlaßkanäle (64a,64b) schneidet, spritzt.

20. Einlaßsystem nach zumindest einem der vorhergehenden Ansprüche 1 bis 19, **dadurch gekennzeichnet,** daß das Steuerventilelement (402) des Steuerventils (401) zusätzlich zu seinen Steuerausschnitten (403) einen sich axial erstreckenden Durchgang (404) aufweist, der sich durch eines seiner Enden erstreckt und an seinem offenen Ende durch eine in dem Zylinderkopf an der Basis der Bohrung (83) ausgebildeten Wand versperrt ist, wobei der Durchgang (404) von einer Vielzahl von Nuten geschnitten wird, die sich nach außen durch Schlitze in der Außenwand auf der Seite in Uhrzeigerrichtung von den Ausschnitten (403) öffnen.

21. Einlaßsystem nach Anspruch 1, **dadurch gekennzeichnet,** daß eine Prallplatte (501) vorgesehen ist, die mit dem Steuerventilelement (505) zusammenwirkt, wobei sich die Prallplatte (501) von einem Ventilsitzabschnitt (502) von einem oder einer Vielzahl von Einlaßventilen integral nach oben und in den jeweiligen Einlaßkanal (64a,64b) erstreckt, in Abhängigkeit davon, welcher Einlaßkanal (64a,64b) durch das Steuerventilelement (505) gesteuert wird.

22. Einlaßsystem nach Anspruch 21, **dadurch gekennzeichnet,** daß das Steuerventil (84) an einem unteren geraden Wandabschnitt der Einlaßkanalanordnung (46,a,64b) seitlich außerhalb einer Ebene, die die Achsen der Einlaßseitenbefestigung (558) enthält, angeordnet ist.

## Revendications

1. Système d'aspiration pour moteur à combustion interne ayant une culasse (57) boulonnée à un bloc-cylindres (52) par des boulons de culasse et définissant au moins partiellement une chambre de combustion (81), un système formant passage d'admission (61) comprenant au moins deux passages d'admission (64a, 64b) pour chaque cylindre afin de desservir une pluralité de soupapes d'admission (66) et une soupape de commande (82, 202) supportée de façon rotative pour réorienter un écoulement de charge d'admission afin de créer un mouvement tourbillonnaire dans la chambre de combustion (81), caractérisé en ce que ladite soupape de commande (82, 202) est conçue pour présenter diverses sections transversales d'écoulement pour les passages d'admission (64a, 64b) en réponse à des positions angulaires de la soupape de commande (82, 202), ladite soupape de commande (82, 202) dépassant du côté inférieur du passage d'admission associé (64a, 64b), le moteur étant considéré en position verticale, et déviant un écoulement de charge d'admission vers un côté supérieur du passage d'admission associé (64a, 64b), de façon à conférer un mouvement tourbillonnaire et/ou rotationnel à la charge d'admission fournie à la chambre de combustion (81).

2. Système d'aspiration selon la revendication 1, caractérisé en ce que la soupape de commande (82) est disposée en aval d'une soupape d'étranglement (71) et est activée dans des conditions de réduction des gaz du moteur.

3. Système d'aspiration selon les revendications 1 ou 2, caractérisé en ce que la soupape de commande (82) est mobile entre une première position à laquelle un premier mode d'écoulement est produit dans la chambre de combustion (81) par modification des sections d'écoulement effectives des passages d'admission (64a, 64b) pour produire une vitesse d'écoulement plus élevée par l'intermédiaire de l'un des passages d'admission (64a) que par l'intermédiaire de l'autre desdits passages d'admission (64b), et une seconde position à laquelle un second mode d'écoulement est produit dans la chambre de combustion (81) par réorientation de l'écoulement par l'intermédiaire des passages d'admission (64a, 64b) dans une direction globalement transversale à l'alésage du cylindre.

4. Système d'aspiration selon la revendication 3, caractérisé en ce que la soupape de commande (82) comprend un élément de soupape de commande (84) pour les passages d'admission (64a, 64b), ledit élément de soupape de commande (84) étant façonné de façon à présenter une section transversale d'écoulement différente pour les parties de ramification commandées des passages d'admission (64a, 64b) en réponse à une certaine position angulaire de l'élément de soupape de commande (84).

5. Système d'aspiration selon au moins l'une des revendications 1 à 4 précédentes, caractérisé en ce que la soupape de commande (82) comprend un élément de soupape cylindrique (84) pouvant tourner dans un alésage (83) qui s'étend transversalement par rapport à la culasse (57), perpendiculairement à un axe de cylindre (A) et sur un côté inférieur d'une anse entre des parties de passage d'admission formant les passages d'admission (64a, 64b).

6. Système d'aspiration selon la revendication 5, caractérisé en ce que l'élément de soupape de commande (84) se compose de deux segments dont chacun a une partie de grand diamètre ayant une échancrure (84a) et une partie de petit diamètre ayant une échancrure (84b), lesdits segments étant reliés l'un à l'autre pour être mis en rotation en commun par des moyens d'engagement (85).

7. Système d'aspiration selon la revendication 6, caractérisé en ce que les échancrures (84a, 84b) de l'élément de soupape de commande (84) sont en face de parties ramifiées de chaque passage d'admission (64a, 64b) conduisant respectivement à des sièges de soupapes (65) des soupapes d'admission (66).

8. Système d'aspiration selon au moins l'une des revendications 1 à 7 précédentes, caractérisé en ce que la soupape de commande (82) est adaptée à commander de façon intégrale la section d'écoulement de parties de passage d'admission du côté de l'admission d'une pluralité de cylindres.

9. Système d'aspiration selon la revendication 8, caractérisé en ce que l'élément de soupape de commande (84) est subdivisé dans la zone comprise entre deux cylindres du moteur.

10. Système d'aspiration selon au moins l'une des revendications 2 à 6 précédentes, caractérisé en ce que le corps de soupape de commande (84) peut tourner en synchronisme avec la soupape d'étranglement principale (71).

11. Système d'aspiration selon au moins l'une des revendications 6 à 10 précédentes, caractérisé en ce que les échancrures (84a, 84b) sont semi-circulaires afin de former des plans d'échancrure qui s'étendent parallèlement, tandis que les parties d'échancrure (84a, 84b) ont un diamètre différent afin d'obturer des parties différentes des passages d'admission (64a, 64b).

12. Système d'aspiration selon au moins l'une des revendications 1 à 11 précédentes, caractérisé en ce qu'un injecteur de carburant (102) est disposé sur la culasse afin d'effectuer une pulvérisation à travers un orifice (101) dans une seule des parties ramifiées d'un passage d'admission (64b) ou afin de produire une pulvérisation égale dans les deux parties ramifiées des passages d'admission (64a, 64b).

13. Système d'aspiration selon la revendication 1, caractérisé en ce qu'un élément de soupape de commande (203) de la soupape de commande (202) présente la forme d'une tige et a des échancrures (203a, 203b) de mêmes dimensions et de mêmes configurations qui coopèrent respectivement avec les passages d'admission (64a, 64b).

14. Système d'aspiration selon au moins l'une des revendications 1 à 13 précédentes, caractérisé en ce que des orifices de tourbillonnement (204) sont formés et s'étendent à travers la culasse pour se terminer dans au moins un passage d'admission (64b) et disposés selon un angle propre à créer un mouvement tourbillonnaire intense vis-à-vis d'une charge introduite, la section transversale d'écoulement dudit orifice de tourbillonnement (204) étant commandée par l'élément de soupape de commande commun (203) de la soupape de commande (202), en prévoyant des échancrures (206) sur l'élément de soupape de commande (203) pour commander lesdits orifices de tourbillonnement (204).

15. Système d'aspiration selon au moins l'une des revendications 1 à 14 précédentes, caractérisé en ce que l'une des parties ramifiées d'un passage d'admission (64a) est disposée à un niveau différent, à savoir plus haut, que l'autre partie ramifiée du passage d'admission (64b).

16. Système d'aspiration selon au moins l'une des revendications 1 à 15 précédentes, caractérisé en ce qu'un évidement (251) est formé entre la culasse (57) et les échancrures (84a, 84b) de l'élément de soupape de commande (84) et un orifice (252) est réalisé de façon à s'étendre à travers la culasse (57) et à s'ouvrir dans ledit évidement (251), ledit orifice (252) étant commandé par l'élément de soupape de commande commun (84) pour commander l'alimentation en air atmosphérique sous pression par l'intermédiaire dudit orifice (252), dont la pression dépasse celle qui s'exerce dans les passages d'admission (64a, 64b) lorsque les soupapes d'admission respectives (66) sont ouvertes.

17. Système d'aspiration selon au moins l'une des revendications 1 à 16 précédentes, caractérisé en ce qu'un orifice d'injection d'air (301) qui s'étend à travers la culasse (47) parallèlement aux passages d'admission (64a, 64b) est réalisé, celui-ci se terminant à l'emplacement d'une pièce d'écartement (302) qui est interposée entre un dispositif de formation de charge, à savoir, un carburateur (68), et la culasse (57), à savoir, son orifice d'admission (61).

18. Système d'aspiration selon la revendication 17, caractérisé en ce que la pièce d'écartement (302) comprend un passage (303) reliant l'orifice d'injection d'air (301) avec un passage d'admission (304) formé dans la pièce d'écartement (302) et qui communique avec un élément aval du dispositif de formation de charge, à savoir, le carburateur (68).

19. Système d'aspiration selon au moins l'une des revendications 1 à 18 précédentes, caractérisé en ce qu'un injecteur de carburant (351) est monté sur la culasse entre les passages d'admission (64a, 64b) et un arbre à cames d'admission, en effectuant une pulvérisation à travers un orifice d'éjection (352) qui coupe l'un des passages d'admission (64a, 64b), ou les deux.

20. Système d'aspiration selon au moins l'une des revendications 1 à 19 précédentes, caractérisé en ce que l'élément de soupape de commande (402) de la soupape de commande (401), en plus de ses échancrures de commande (403) a un passage s'étendant axialement (404) qui s'étend à travers l'une de ses extrémités et est fermé à son extrémité ouverte par une paroi (405) formée dans la culasse (47) à la base de l'alésage (83), ledit passage (404) étant coupé par une pluralité de fentes cordales (406) qui s'ouvrent à travers des encoches pratiquées dans la surface extérieure qui est disposée dans le sens des aiguilles d'une montre par rapport aux échancrures (403).

21. Système d'aspiration selon la revendication 1, caractérisé en ce qu'une plaque de redressement (501) est prévue, celle-ci coopérant avec l'élément de soupape de commande (505), ladite plaque de redressement (501) partant d'une partie formant siège de soupape (502) d'une ou d'une pluralité de soupapes d'admission, intégralement, vers le haut et à l'intérieur du passage d'admission respectif (64a, 64b) selon celui des passages d'admission (64a, 64b) qui est commandé par l'élément de soupape de commande (505).

22. Système d'aspiration selon la revendication 21, caractérisé en ce que ladite soupape de commande (84) est disposée à l'emplacement d'une partie de paroi droite inférieure du système formant passage d'admission (64a, 64b), latéralement, vers l'extérieur d'un plan contenant les axes des goujons situés du côté de l'admission (558).
